# EUROPÄISCHE PATENTSCHRIFT

(11) **EP 1 136 233 B1**
(45) Veröffentlichungstag und Bekanntmachung des Hinweises auf die Patenterteilung: **10.11.2004**
(21) Anmeldenummer: 01107368.1
(22) Anmeldetag: 23.03.2001
(51) Int. Cl.: B29C 65/20, B29C 65/78, E06B 3/26

(54) **Vorrichtung zum Verschweissen von Kunststoffprofilstäben**
Device for welding plastic profiled bars
Dispositif de soudage de barres profilées en matière plastique

(30) Priorität: 23.03.2000 DE 10014163
(43) Veröffentlichungstag der Anmeldung: 26.09.2001
(73) Patentinhaber: Urban GmbH & Co. Maschinenbau KG, D-87700 Memmingen (DE)
(72) Erfinder: Tesch, Wolfgang, 87751 Heimertingen (DE)
(74) Vertreter: Pfister, Helmut, Dipl.-Ing.

(56) Entgegenhaltungen:
- DE-A- 2 519 768
- DE-A- 3 733 914

## Beschreibung

Die Erfindung betrifft eine Vorrichtung zum Verschweißen von mindestens zwei Kunststoffprofilstäben zu einem Rahmenteil oder einem Rahmen, zum Beispiel eines Fensters, einer Türe oder dergleichen, wobei zumindest eines der zu verschweißenden Profile auf einem Schlitten derart beweglich auf einer Führung gelagert und längs einer Bewegungsbahn beweglich ist, daß die beiden Profile an ihren Schweißflächen zusammenführbar sind.

Aus der DE 41 10 276 A1 ist eine Schweißvorrichtung für rechteckige Rahmen, insbesondere Fensterrahmen bekannt, die aus vier Kreuzführungen, gegeneinander verfahrbaren Spann- und Schweißeinheiten mit jeweils zwei rechtwinklig zueinander angeordneten und jeweils eine dem Kunststoffprofil entsprechende Schweißbeilage aufnehmenden Anschlägen sowie aus einer den geschweißten Rahmen anhebenden und in horizontale Lage abführenden Transporteinrichtung bestehen. Aufgabe dieser Erfindung ist es, eine Vorrichtung zur Herstellung eines rechteckigen Rahmens, insbesondere eines Fensterrahmens aus vier Kunststoffprofilen so auszubilden, daß der fertige Rahmen sofort nach Beendigung des Schweißvorganges aus der Schweißposition abtransportiert werden kann. Diese Aufgabe wird dadurch gelöst, daß die Anschläge der Transporteinrichtungen aus ihrer Anschlagstellung entfernbar ausgebildet sind.

Aus der DE 37 33 914 A1 ist eine Schweißvorrichtung zum Verbinden von Kunststoffprofilen bekannt, wobei die Aufgabe der in dieser Patentschrift vorgestellten Lösung darin gesehen wird, eine einwandfreie Geradlinigkeit und Gleichförmigkeit der Schnittkanten und Verschweißungen zu gewährleisten. Es ist weiterhin Aufgabe dieser Lösung, Verformungen des Profiles zu vermeiden. Zur Lösung der gestellten Aufgabe werden in Deckeln oder in Formhälften oberhalb beziehungsweise unterhalb der Querschnittsbegrenzung der Nut Anschlagschieber in Richtung der Nut verschiebbar geführt. Weiterhin sind Vorspanneinrichtungen vorgesehen, die die Anschlagschieber bei voneinander entfernten Stirnkanten der Formhälften über diese hinaus verschieben. Die Anschlagschieber sind beim Schließen der Formhälften in die Deckel beziehungsweise die Formhälften hinein verschiebbar.

In der EP 0 885 713 A1 wird eine Vorrichtung zum gleichzeitigen Verschweißen von mindestens vier auf Gehrung geschnittenen Profilabschnitten vorgestellt. Aufgabe dieser vorgestellten Lösung ist es, Schwankungen der Länge der Profilstäbe auszugleichen. Dazu sind Distanzelemente mit Federn ausgestattet.

Die EP 0 531 682 A2 beschreibt eine solche Vorrichtung zum Verschweißen von Profilen aus Kunststoff, von der die vorliegende Erfindung ausgeht. Gemäß dieser Druckschrift ist vorgesehen, daß jedes Aggregat zum Schweißen Verstellachsen aufweist. Mittels dieses Lösungsvorschlags soll eine weiterreichende Begrenzung der Schweißwülste ermöglicht werden, ohne daß die Gefahr des Abreißens der Wülste beim Entfernen der Profile aus der Schweißeinrichtung entsteht. Eine weitere Aufgabe soll mittels dieses Vorschlags gelöst werden, wonach ein Verschweißen von Dichtlippen an den Profilen in einwandfreier Weise durchführbar sein soll.

Weitere Vorrichtungen sind für die Herstellung von Fenstern, insbesondere aus Kunststoffprofilen, hinlänglich bekannt. Dabei werden die zu verarbeitenden Profilstäbe auf Maß abgelängt und an ihren Enden mit Gehrungsflächen ausgestattet. An den Gehrungsflächen, die auch gleichzeitig die Schweißflächen bilden, werden benachbarte Profile zusammengeschweißt. Es ist natürlich auch möglich, Profilstäbe stumpf miteinander zu verbinden, indem sie aneinandergestoßen und verschweißt werden, ohne daß diese einen Winkel hierbei bilden.

Vorgenannte Vorrichtungen sind auch als Fensterschweißmaschinen bekannt. Die Maschinen sind dabei so ausgebildet, daß sie unterschiedliche Profilstäbe beziehungsweise Profiltypen bearbeiten. Komfortable Maschinen weisen dabei mehrere Köpfe für das gleichzeitige Verschweißen von zum Beispiel vier Profilstäben an den Ecken eines Fensters auf. Nachdem die Schweißbeziehungsweise Gehrungsfläche von einem Schweißspiegel erhitzt worden ist, werden die Schweißflächen zusammengefügt und die beiden Profilstäbe zu einem Rahmenteil beziehungsweise einem Rahmen verschweißt. Bei diesem Fügevorgang ergibt es sich, daß an der Gehrungsfläche Kunststoffmaterial seitlich verdrängt wird und einen Schweißwulst bildet. Die Ausbildung dieses Schweißwulstes wird durch sogenannte Quetschplatten, die an den Schweißflächen angrenzen, begrenzt beziehungsweise gesteuert, dahingehend, daß der Schweißwulst leicht vom Rahmenteil abtrennbar ist beziehungsweise ein möglichst kleiner Schweißbereich sichtbar bleibt. Dies ist insbesondere bei mit Folie beschichteten Profilen zu beachten, die im Eckbereich an der Gehrungslinie dadurch eine unschöne Naht aufweisen können.

Die Ausbildung des Schweißwulstes wird nach den aus dem Stand der Technik bekannten Lösungsvorschlägen im wesentlichen definiert durch die Ausgestaltung der miteinander zusammenwirkenden Quetschplatten, die gegebenenfalls einen Spalt von wenigen 1/10 mm bis einigen mm aufweisen kann. Die Spaltbreite wird dabei in der Regel in Abhängigkeit von dem zu verarbeitenden Profiltyp gewählt, wobei bei oftmals wechselnden Profiltypen für eine ordentliche Bearbeitung auch jedesmal die Spaltbreite entsprechend einzustellen ist. Nun ist eine solche Spaltbreite auf der Unterseite und der Oberseite an jeder Ecke einzustellen. Die Spaltbreite ergibt sich dabei aus der Differenz der Position zweier miteinander zusammenwirkender Quetschplatten, die jeweils mit dem zu verschweißenden ersten und zweiten Profil zusammenwirken. Ein manuelles Verstellen dieser Spaltbreite, zum Beispiel durch ein Ummontieren der Quetschplatten, ist, aufgrund der großen Zahl von Quetschplatten, sehr aufwendig und zeitraubend.

Aus dem Stand der Technik ist hierzu bekannt, daß die Quetschplatte mit einem Antrieb gegenüber dem Schlitten ausgestattet ist und so die Spaltbreite einstellbar wird. Der Antrieb wirkt dabei parallel zur Längserstreckung der Profile.

Eine solche Ausgestaltung ist sehr aufwendig, da ein solcher Antrieb bei einer Vierkopf-Maschine 16-fach zu verbauen ist, nämlich für jede einzelne Quetschplatte. Des weiteren ist ein solcher Antrieb, der sich in Längsrichtung der Profilerstreckung erstrecken muß, verhältnismäßig platzaufwendig und daher schwer zu realisieren.

Aus der deutschen Offenlegungsschrift 25 19 768 ist eine Vorrichtung zum Stumpfschweißen von Kunststoffprofilen bekannt. Dort wird mit Hilfe von außenseitig umfassenden Führungsschienen eine Justiermöglichkeit geschaffen, die eine genaue Einhaltung des Anschmelzweges der Profilendflächen und damit eine definierte Schweißnahtbildung ermöglichen sollen. Die Führungsschienen sind dabei achsparallel zu ihrer Längsachse angeordnet, die mit der Längsachse der aufgespannten Profile übereinstimmt, und die Blattmesser sind senkrecht zur Profilendfläche justierbar. Der Nachteil dieser Ausgestaltung ist, daß bei der Änderung von Profilen eine jeweilige Neueinstellung beziehungsweise Justierung erforderlich ist. Diese Tätigkeiten erfordern sehr viel Zeit und gestalten die Lösung daher unökonomisch.

Die Erfindung hat es sich zur Aufgabe gemacht, eine Vorrichtung wie eingangs beschrieben dahingehend zu verbessern, daß die Spaltbreite in einfacher und zuverlässiger Art und Weise variierbar ist, wobei die angestrebte Lösung, insbesondere bei einem automatischen Ablauf einer solcher Vorrichtung, einzusetzen sein soll.

Gelöst wird diese Aufgabe durch eine Vorrichtung wie eingangs beschrieben, wobei vorgeschlagen wird, daß ein oder mehrere Anschläge in die Bewegungsbahn bringbar sind, die die Bewegung des beziehungsweise der Schlitten begrenzt beziehungsweise begrenzen.

Für die Herstellung des Rahmens beziehungsweise des Rahmenteiles aus den Kunststoffprofilstäben ist es bekannt, die Kunststoffprofilstäbe auf je einem Schlitten beweglich zu lagern. Die bewegliche Lagerung ist dabei zum Beispiel sowohl in Längserstreckung als auch rechtwinklig oder winklig hierzu, insbesondere rechtwinklig zur Gehrungsfläche ausgebildet. Durch diese Beweglichkeit wird erreicht, daß der Profilstab zum Beispiel zunächst gegen den Schweißspiegel geführt wird und erwärmt wird, dann von diesem wieder entfernt wird, dann der Schweißspiegel entfernt wird und dann die Profilstäbe wieder aufeinander zugeführt werden, derart, daß diese an den Schweißbeziehungsweise Gehrungsflächen einander berühren und so verschweißt werden. In einfacher Weise wird nun vorgeschlagen, die Bewegung der Schlitten, die je einen Profilstab halten, durch steuerbare Anschläge zu begrenzen. Die Anschläge sind dabei nur einmalig einzustellen und dann durch eine entsprechende Maschinensteuerung anzusteuern, um diese zu aktivieren. Sie bestimmen letzendlich die Lage des Schlittens bei vorgebbaren Bearbeitungsschritten des Bearbeitungsprozesses. Im Gegensatz hierzu dienen die Anschläge im Stand der Technik (zum Beispiel inbesondere DE 41 10 276), den fertig geschweißten Rahmen durch die Anschläge bei der Ausförderbewegung zu steuern.

Dabei erreicht die erfindungsgemäße Ausgestaltung nicht nur, daß in einfacher Weise, wie eingangs beschrieben, der Spalt zwischen den zusammenwirkenden Quetschplatten in seiner Breite variierbar ist, sondern daß es problemlos möglich ist, den Schlitten an genau definierten Positionen anzuhalten, was ein überraschender Nebeneffekt zur Erfindung ist, aber gerade bei dem Einsatz für das Erwärmen der Schweißflächen von Vorteil ist.

Günstigerweise sind die Anschläge als pneumatisch, hydraulisch ansteuerbare Elemente ausgebildet, oder sie sind als elektromagnetisch angesteuerte beziehungsweise betriebene Geräte ausgebildet. In einfacher Weise ist es auch möglich eine genaue Einstellung zu erreichen, indem entweder die Anschlagfläche oder aber die Position des Anschlages an dem jeweiligen Träger beziehungsweise die damit zusammenwirkende Anschlagleiste oder Anschlagkante verstellbar ausgebildet ist.

In einer bevorzugten Ausgestaltung der Erfindung ist vorgesehen, daß entweder ein oder auch mehrere Anschläge, wie beschrieben, vorgesehen sind, die je nach der gewünschten Position des Profiles ausgewählt werden und den Bewegungsweg des Profiles beziehungsweise des Schlittens begrenzen.

Dabei ist vorgesehen, daß der beziehungsweise die Anschläge mit dem Schlitten beweglich sind und an der Vorrichtung beziehungsweise an der Führung, ortsfest, eine Anschlagleiste oder Anschlagkante vorgesehen ist, die bei aktiviertem Anschlag mit diesem zusammenwirkt.

Je nach den baulichen Gegebenheiten bietet es sich an, die Anschlagleiste beziehungsweise Anschlagkante ortsfest an der Vorrichtung anzuordnen. Günstigerweise wird hierbei zum Beispiel die Führung, welche den Schlitten trägt, eingesetzt.

In gleicher Weise ist aber auch eine umgekehrte Anordnung möglich, nämlich derart, daß der beziehungsweise die Anschläge an der Vorrichtung ortsfest angeordnet sind und auf dem Schlitten eine sich mit dem Schlitten bewegende Anschlagleiste beziehungsweise Anschlagkante vorgesehen ist, die mit dem Anschlag zusammenwirkt.

Alternativ hierzu ist es auch möglich, daß, wenn zum Beispiel beide zu verschweißenden Profile auf einem Schlitten beweglich gelagert sind, der Anschlag des ersten Schlittens mit einer Anschlagleiste beziehungsweise Anschlagkante zusammenwirkt, die an dem zweiten Schlitten des zweiten zu verschweißenden Profilstabes angeordnet ist. Letzendlich ist anzustreben, daß eine Festlegung der beiden zu verschweißenden Profilstäbe in einer Ebene (bei vorgegebener Höhe) erfolgt. Die Relativposition der beiden Stäbe in dieser Ebene wird durch zwei, zum Beispiel ortogonal oder rechtwinklig zusammenwirkende Anschlagleisten/kantenpaare festgelegt werden, wobei die jeweils kommunizierenden Elemente, Anschlag und Anschlagleiste beziehungsweise Anschlagkante, auf dem jeweils beweglichen Schlitten angeordnet sind. Der erste Anschlag reduziert eine freie Beweglichkeit in zwei Dimensionen auf eine Dimension, der zweite Anschlag eliminiert diesen verbleibenden Freiheitsgrad.

In der bevorzugten Ausgestaltung der Erfindung ist vorgesehen, daß auf dem Schlitten, als Teil des Schlittens, eine Quetschplatte vorgesehen ist, die im Zusammenwirken mit einer weiteren Quetschplatte, die an dem Schlitten des zweiten Kunststoffprofilstabes vorgesehen ist, beim Zusammenfügen im Bereich der Schweißfläche einen Spalt ergibt, dessen Spaltbreite durch den Anschlag/die Anschläge einstellbar ist.

Die Erfindung bezieht sich dabei sowohl auf verhältnismäßig einfache Maschinen, bei welchen die Zusammenfügbewegung der Profilstäbe mit den erhitzten Schweißflächen nur durch die Bewegung eines Profiles erbracht wird, wie auch komplexere Maschinen, bei welchen die jeweils zu verschweißenden Kunststoffprofilstäbe beim Verschweißen jeweils bewegt werden. Hieraus resultiert, daß bei einfacheren Maschinen der zweite Profilstab unbeweglich gelagert ist oder ebenfalls schlittenartig geführt ist. Zur Verringerung beziehungsweise Einstellbarkeit dieses Spaltes, der insbesondere bei der Verarbeitung unterschiedlicher Profiltypen von Interesse ist, wirken entsprechend ausgebildete Quetschplatten zusammen. Im Idealfall ist die Spaltbreite entlang der Gehrungsfläche beziehungsweise Gehrungslinie konstant. Es ist aber auch möglich, daß die Spaltbreite variiert. Dabei ist es günstig, daß jeder der bewegten Schlitten mit Anschlägen beziehungsweise mehreren Anschlägen ausgestattet ist, um die Bewegung des Schlittens beziehungsweise des darauf gelagerten Profiles an verschiedenen Positionen zu begrenzen beziehungsweise zu stoppen.

In einer bevorzugten Ausgestaltung ist vorgesehen, daß in der Anschlagleiste beziehungsweise Anschlagkante oder in dem Anschlag ein Anschlagschalter vorgesehen ist. Durch die Verwendung eines Anschlagschalters ist es möglich, die Position des Schlittens festzustellen beziehungsweise abzufragen, ob der Schlitten die angestrebte Position am Anschlag erreicht hat. Günstigerweise wird hierzu der Anschlagschalter in das Konzept der Maschinensteuerung integriert.

In einer Weiterentwicklung der Erfindung ist vorgesehen, daß die Anschlagsposition des Anschlages, welcher bei aktivem Anschlag die Bewegung des Profiles beschränkt, einstellbar ist. Typischerweise bietet der Anschlag eine Anschlagfläche, die mit der Anschlagleiste beziehungsweise der Anschlagkante zusammenwirkt. Diese Anschlagfläche ist bezüglich des Antriebes des Anschlages nun alternativ fest, das heißt, nicht verstellbar oder aber verstellbar ausgebildet. Hierzu ist zum Beispiel eine Spindellagerung der Anschlagfläche vorgesehen, an welche ein kleiner Elektromotor, der zum Beispiel als Schrittmotor ausgestattet ist, drehend angreift und, aufgrund der gezählten Schritte und der bekannten Steigung der Spindel, die Relativposition der Anschlagfläche ermittelt. Da die Anschlagfläche über die Spindel in einem Träger gelagert ist, weist die Spindel eine ausreichende Selbsthemmung auf, damit keine Anschlagkräfte auf den Stellmotor wirken. So kann in einfacher Weise ein in sich selbst ansteuerbarer beziehungsweise positionierbarer Anschlag realisiert werden, wodurch die Komfortabilität einer solchen Vorrichtung noch weiter erhöht wird.

In analoger Weise ist es auch möglich, die Anschlagleiste beziehungsweise die Anschlagkante mit einer sich selbst positionierenden Anschlaggegenfläche auszustatten, um auch dadurch eine gewisse Variabilität zu erreichen.

Für die Einstellung der Anschlagposition ist dabei eine Anschlagpositionssteuerung beziehungsweise und/oder eine Anschlagspositionsregelung vorgesehen. Diese Elemente wirken günstigerweise mit der Maschinensteuerung zusammen. Dadurch ist es möglich, eine gewünschte beziehungsweise vorgebbare Position des Anschlages und eine daraus resultierende Endstellung des Schlittens beziehungsweise Profiles bei einem gegebenen Bearbeitungsschritt zu realisieren. Dabei wird eine neue Position dann an dem Anschlag eingestellt, wenn dieser nicht aktiviert, also in einer zurückgezogenen, deaktivierten Stellung ist. In diesem Fall wirken auf die Spindel keine Anschlagkräfte und die Spindel ist leicht drehbar.

Bei Verschweißen von Kunststoffprofilstäben werden normalerweise zwei verschiedene Positionen der Profilstäbe relativ zueinander angefahren. Dies ist zunächst die Endposition des Angleichweges und die Endposition des Fügeweges. Im ersten Schritt des Verschweißens wird der gegebenenfalls auch mit Übermaß abgeschnittene Profilstab am hereingeschwenkten Schweißspiegel erhitzt. Dabei wird der Profilstab entlang des Angleichweges bis zu einer vorgegebenen Endposition an dem Schweißspiegel herangeführt.

Bei diesem Angleichweg wird gegebenenfalls ein vorhandener Überstand einfach weggeschmolzen. Danach fährt der Profilstab zurück, gibt den Schweißspiegel frei, der dann weggeschwenkt wird. Es folgt der Fügeprozeß entlang eines Fügeweges, dessen Endposition ebenfalls durch einen Anschlag begrenzt wird, genauso wie die Endposition des Angleichweges. Je nach gewähltem Profiltyp sind hierbei unterschiedliche Positionen anzusteuern, die für einen verwendeten Profiltyp charakteristisch sind.

Günstigerweise werden die jeweils zusammenwirkenden Anschläge pro Profiltyp als Anschlagssatz zusammengefaßt. Durch eine solche Vorgehensweise wird die Maschinensteuerung deutlich erleichtert. Aufgrund des ausgewählten Profiltypes wird für diesen Schweißvorgang ein Anschlagsatz zugeordnet. Der Anschlagsatz umfaßt dabei zumindest einen Anschlag für die Endposition des Angleichweges und einen Anschlag für die Endposition des Fügeweges, wobei der jeweilige Anschlag bei Bedarf, zum richtigen Zeitpunkt, welcher durch die Maschinensteuerung vorgegeben wird, aktiviert wird. Günstigerweise weist die Vorrichtung einen, zwei oder mehrere Anschlagsätze auf, die am Schlitten nebeneinander, oder auch versetzt, hintereinander angeordnet sind. Hieraus resultiert eine große Variabilität für die Positionierung des Profiles.

Des weiteren ist in der Maschinensteuerung auch vorgesehen, daß die verschiedenen Profiltypen, die zu Verschweißen sind, eingebbar sind, beziehungsweise die maschinensteuerung die profiltypen selbstständig erkennt und in Abhängigkeit des Profiltyps einen Anschlagsatz auswählt. Günstigerweise zum Beispiel ist auf dem Profiltyp eine maschinenlesbare Codierung, zum Beispiel ein Barcode oder ein Transponder angeordnet, der eine vollautomatische Bearbeitung durch eine erfindungsgemäße Vorrichtung erlaubt.

Erfindungsgemäß ist vorgesehen, daß die Profilstäbe rechtwinklig zu ihrer Längserstreckung und/oder zur Gehrungsfläche beziehungsweise Schweißfläche beweglich gelagert sind und so die Bewegungsbahn definieren. Bei einfachen Anwendungsfällen ist es möglich, daß eine Bewegung parallel zur Längserstreckung erfolgt. Durch die Ausrichtung der Bewegungsbahn wird erreicht, die miteinander zu verschweißenden Profilstäbe an ihren Gehrungs- beziehungsweise Schweißflächen in einfacher Weise möglichst gleichförmig zusammenzuführen. Je nach Komplexität der Vorrichtung, zum Beispiel als Ein-, Zwei- oder Vierkopfmaschine, werden dabei verschiedene Bewegungsbahnen vorgesehen, wobei zum Beispiel bei einer Zwei- oder Vierkopfmaschine eine Bewegungsbahn der jeweiligen Profilstäbe rechtwinklig zu ihrer Längserstreckung vorgesehen ist, bei Einkopfmaschinen hingegen eine Bewegungsbahn rechtwinklig zu deren Gehrungsfläche.

Alternativ ist es auch möglich, daß eine Überlagerung dieser beiden Bewegungen vorgesehen ist. Es ist also eine Bewegung in einer Ebene möglich.

In einer weiteren Ausgestaltung der Erfindung ist vorgesehen, daß der Anschlag eine mit der Anschlagleiste beziehungsweise Anschlagkante zusammenwirkende Anschlagfläche besitzt und der Anschlag in zwei oder mehreren Stellen aktivierbar ist, wodurch eine andere Anschlagfläche am gleichen Anschlag eingesetzt wird.

Durch eine solche Ausgestaltung ist es möglich, an einem Anschlag mehrere Einstellmöglichkeiten für den Profilstab zu realisieren. Der Anschlag ist dabei in verschiedene Positionen bringbar, wodurch unterschiedlich, an dem gleichen Anschlag vorgesehene Anschlagflächen wirksam werden, die mit der Anschlagleiste beziehungsweise Anschlagkante zusammenwirken.

In der Zeichnung ist die Erfindung schematisch dargestellt. Es zeigen:
- Fig. 1: eine Draufsicht auf die erfindungsgemäße Vorrichtung und
- Fig. 2: eine Seitenansicht der erfindungsgemäßen Vorrichtung nach Fig. 1.

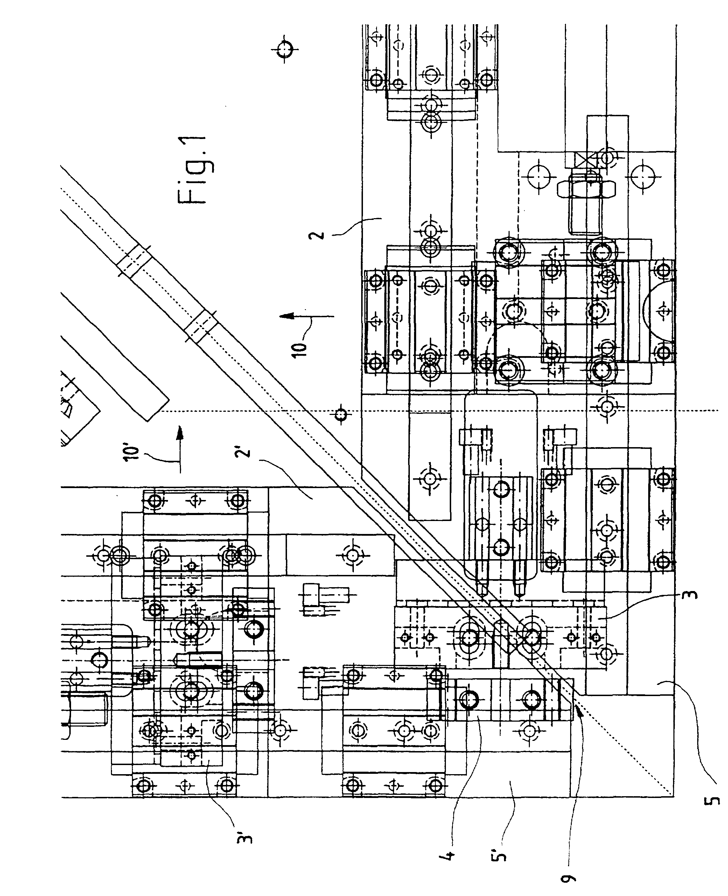

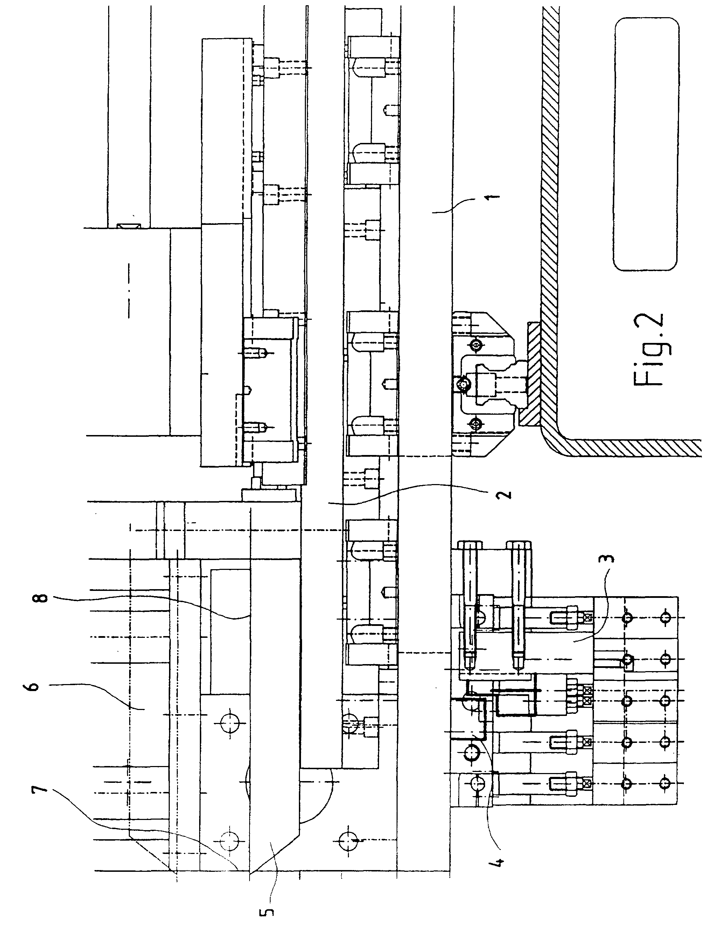

In Fig. 1, 2 ist ein Eckbereich einer Ein- oder auch Mehrkopfmaschine zum Verschweißen von Kunststoffprofilstäben gemäß der Erfindung gezeigt. Die nicht gezeigten Profilstäbe liegen dabei auf Schlitten 2, 2' auf und werden über diese Führungen entlang von Bewegungsbahnen 10, 10' derart bewegt, daß die Gehrungsflächen der Profile miteinander in Berührung kommen, um dann miteinander verschweißt zu werden.

Wie in Fig. 1 angedeutet, ist die Bewegungsbahn 10, 10' im wesentlichen rechtwinklig zur gedachten Längserstreckung der nicht dargestellten Profile.

In Fig. 2 ist ein Anschlagblock 3 gezeigt, der einen oder mehrere verschiedene Anschläge besitzt, die jeweils getrennt ansteuerbar sind. Dabei ist dieser Anschlagblock 3 mit dem Schlitten 2 fest verbunden und führt die gleiche Bewegung aus wie der Schlitten.

Bei dem hier insbesondere in Fig. 1 gezeigten Ausführungsbeispiel befindet sich die mit dem Anschlag zusammenwirkende Anschlagleiste 4 an dem zweiten Schlitten 2' und bewirkt so eine Begrenzung des zweiten Schlittens 2' auf seiner Bewegungsbahn 10'. In analoger Weise wird auch die Bewegung des ersten Schlittens 2 auf dessen Bewegungsbahn 10 begrenzt.

wie insbesondere in Fig. 1 klar wird, ist die jeweilige Bewegungsbahn 10, 10' so getroffen, daß sich die Gehrungsflächen der gedacht aufgelegten Profilstäbe, die ja zu verschweißen sind, aufeinander zubewegt werden.

In Fig. 2 ist eine Quetschplatte 5 abgebildet, die in dem hier gezeigten Ausführungsbeispiel unterhalb des Profilstabes zu liegen kommt, das Profil liegt auf der Oberfläche 8 der Quetschplatte 5 auf.

Die Quetschplatte 5 bildet mit einer entsprechenden zweiten Quetschplatte 5' für die Halterung beziehungsweise Bewegung des zweiten Profils einen Spalt 9, der im Gehrungsbereich beziehungsweise Schweißbereich angeordnet ist.

In Fig. 2 ist angedeutet, daß die Quetschplatte 5 an dem dem Spalt 9 zugewandten Ende spitzwinklig, ca. 15° bis 65° Öffnungswinkel aufweisend, ausgebildet ist. Es ist auch in einer Variante der Erfindung vorgesehen, diesen Endbereich messerartig, als Schneide auszubilden. Diese schneidenartige Ausgestaltung 7 erlaubt es, einen sich an den Kunststoffprofilen bei dem Schweiß- beziehungsweise Fügevorgang ergebenden Schweißwulst schon abzutrennen beziehungsweise so sehr einzuschneiden beziehungsweise einzuschnüren, daß diese Wülste in einfacher Weise anschließend abgezogen oder entfernt werden können.

Je nach Wahl des Anschlages auf den jeweiligen Anschlagblöcken 3, 3' ist durch die erfindungsgemäße Ausgestaltung eine Variation dieser Spaltbreite möglich. Dadurch ist es letztendlich auch möglich, die Form des Schweißwulstes beziehungsweise dessen Abschnürung zu bestimmen. Dies kann im Hinblick auf verschiedene Profiltypen von Vorteil sein.

In Fig. 2 ist oberhalb der Quetschplatte 5 eine weitere Platte 6 angedeutet, die entweder als Spannplatte und/oder gegebenenfalls auch als Quetschplatte dient. Zwischen Quetschplatte 5 und Spannplatte 6 befindet sich dabei das zu verschweißende Kunststoffprofil.

Wie die beiliegenden Figuren vermuten lassen, wird mit einer erfindungsgemäßen Vorrichtung ein rechtwinkliger Rahmen zusammengeschweißt. Auf eine solche Ausgestaltung der damit hergestellten Fenster ist die Erfindung aber nicht beschränkt. In gleicher Weise ist es möglich, rechtwinklig abgeschnittene Profile aneinanderstoßend zu größeren Profilen zu verschweißen oder aber runde, gebogene beziehungsweise sonstwie winklig aneinanderstoßende Profile mit dieser Vorrichtung zu verschweißen.

## Patentansprüche

1. Vorrichtung zum Verschweißen von mindestens zwei Kunststoffprofilstäben zu einem Rahmenteil oder einem Rahmen, zum Beispiel eines Fensters, einer Türe oder dergleichen, wobei zumindest eines der zu verschweißenden Profilstäbe auf einem Schlitten derart beweglich auf einer Führung gelagert und längs einer Bewegungsbahn beweglich ist, daß die beiden Profilstäbe an ihren Schweißflächen zusammenführbar sind, **dadurch gekennzeichnet, daß** ein oder mehrere Anschläge (3) in die Bewegungsbahn (10) bringbar sind, die die Bewegung der Schlitten (2, 2') begrenzt beziehungsweise begrenzen.

2. Vorrichtung nach Anspruch 1, **dadurch gekennzeichnet, daß** der beziehungsweise die Anschläge (3) mit dem Schlitten (2) beweglich ist/sind und an der Vorrichtung, zum Beispiel an der Führung (1), ortsfest eine Anschlagleiste (4) beziehungsweise eine Anschlagkante vorgesehen ist, die bei aktiviertem Anschlag (3) mit diesen zusammenwirkt.

3. Vorrichtung nach einem oder beiden der vorhergehenden Ansprüche, **dadurch gekennzeichnet, daß** der/die Anschlag/Anschläge (3) an der Vorrichtung ortsfest angeordnet sind und an dem Schlitten (2) eine sich mit dem Schlitten (2) bewegende Anschlagleiste (4) beziehungsweise Anschlagkante vorgesehen ist, die mit dem aktivierten Anschlag (3) zusammenwirkt.

4. Vorrichtung nach einem oder mehreren der vorhergehenden Ansprüche, **dadurch gekennzeichnet, daß** die Unterschiedlichen Anschläge (3) eine Begrenzung der Schlittenbewegung in unterschiedlichen Positionen auf der Bewegungsbahn (10) ergibt.

5. Vorrichtung nach einem oder mehreren der vorhergehenden Ansprüche, **dadurch gekennzeichnet, daß** auf dem Schlitten (2) als Teil des Schlittens (2) eine Quetschplatte (5) vorgesehen ist, die im Zusammenwirken mit einer weiteren Quetschplatte (5') oder dergleichen des Schlittens (2') beziehungsweise der Lagerung des zweiten Kunststoffprofilstabes beim Zusammenfügen im Bereich der Schweißung einen Spalt (9) ergibt, dessen Spaltbreite durch die Aktivierung der Anschläge (3) einstellbar ist.

6. Vorrichtung nach einem oder mehreren der vorhergehenden Ansprüche, **dadurch gekennzeichnet, daß** die Quetschplatte (5) zum Beispiel an der dem Spalt (9) zugewandten Seite messerartig oder spitzwinklig (7) ausgebildet ist, um einen beim Schweißen entstehenden Schweißwulst möglichst abzuscheren oder leicht entfernbar zu machen.

7. Vorrichtung nach einem oder mehreren der vorhergehenden Ansprüche, **dadurch gekennzeichnet, daß** in der Anschlagleiste/Anschlagkante (4) oder in dem Anschlag (3) ein Anschlagschalter vorgesehen ist.

8. Vorrichtung nach einem oder mehreren der vorhergehenden Ansprüche, **dadurch gekennzeichnet, daß** der Anschlag (3) im Bereich der Quetschplatte (5) angeordnet ist.

9. Vorrichtung nach einem oder mehreren der vorhergehenden Ansprüche, **dadurch gekennzeichnet, daß** die beiden zu verschweißenden Profilstäbe je derart beweglich gelagert und aufeinanderzubewegbar sind, und für die Begrenzung jeder Bewegung je ein oder mehrere Anschläge (3, 3') vorgesehen sind.

10. Vorrichtung nach einem oder mehreren der vorhergehenden Ansprüche, **dadurch gekennzeichnet, daß** die Anschlagposition des Anschlages (3) und/oder der Anschlagleiste/kante (4), welcher bei aktiven Anschlag (3) die Bewegung des Profiles beschränkt, einstellbar ist.

11. Vorrichtung nach einem oder mehreren der vorhergehenden Ansprüche, **dadurch gekennzeichnet, daß** für die Einstellung der Anschlagsposition eine Anschlagspositionssteuerung und Anschlagspositionsregelung vorgesehen ist.

12. Vorrichtung nach einem oder mehreren der vorhergehenden Ansprüche, **dadurch gekennzeichnet, daß** pro zu verschweißenden Profiltyp ein Anschlagsatz vorgesehen ist, der mindestens aus zwei Anschlägen besteht, wobei der erste Anschlag die Endposition des Angleichweges und der zweite Anschlag die Endposition des Fügeweges auf der Bewegungsbahn definiert.

13. Vorrichtung nach einem oder mehreren der vorhergehenden Ansprüche, **dadurch gekennzeichnet, daß** eine Maschinensteuerung vorgesehen ist, die den Schweißvorgang überwacht und in Abhängigkeit des Schweißvorganges zunächst der erste Anschlag und dann der zweite Anschlag aktiviert wird.

14. Vorrichtung nach einem oder mehreren der vorhergehenden Ansprüche, **dadurch gekennzeichnet, daß** in die Maschinensteuerung der Profiltyp eingebbar ist und/oder die Maschinensteuerung den Profiltyp erkennt und in Abhängigkeit des Profiltyps einen Anschlagsatz auswählt.

15. Vorrichtung nach einem oder mehreren der vorhergehenden Ansprüche, **dadurch gekennzeichnet, daß** die Profilstäbe rechtwinklig zu ihrer Längserstreckung und/oder zur Gehrungsfläche beziehungsweise Schweißfläche beweglich gelagert sind und so die Bewegungsbahn (10, 10') definieren.

16. Vorrichtung nach einem oder mehreren der vorhergehenden Ansprüche, **dadurch gekennzeichnet, daß** sich die mit dem Anschlag (3) zusammenwirkenden Anschlagleisten/Anschlagkanten (4) an dem Schlitten (2') des zweiten, zu verschweißenden Profiles befinden.

17. Vorrichtung nach einem oder mehreren der vorhergehenden Ansprüche, **dadurch gekennzeichnet, daß** der Anschlag eine mit der Anschlagleiste/-kante zusammenwirkende Anschlagfläche besitzt und der Anschlag in zwei oder mehreren Stellungen aktivierbar ist, wodurch andere Anschlagflächen am gleichen Anschlag eingesetzt werden.

## Claims

1. Device for welding of at least two synthetic profile bars into a frame part or a frame, for example of a window, a door or the like, at least one of the profile bars which have to welded being supported on a sledge movably on a guide and being movable along a path of motion in such a way, so that the two profile bars can be brought together on their welding surfaces, **characterised in that** one or more stoppers (3) can be brought into the path of motion (10) which limits, respectively limit, the movement of the sledges (2, 2').

2. Device according to claim 1, **characterised in that** the stopper (3), respectively the stoppers (3), can move together with the sledge (2) and on the device, for example the guide (1), stationary a stop rail (4), respectively a stop edge, is provided which acts together with the activated stopper (3) when it is activated.

3. Device according to one or both of the preceding claims, **characterised in that** the stopper/stoppers (3) are arranged stationary on the device, and on the sledge (2) a stop rail (4), respectively stop edge, is provided which moves together with the sledge (2) and interacts with the activated stopper (3).

4. Device according to one or more of the preceding claims, **characterised in that** the different stoppers (3) result in a limit of the notion of the sledge in different positions on the path of motion (10).

5. Device according to one or more of the preceding claims, **characterised in that** on the sledge (2) as part of the sledge (2) a squeezing plate (5) is provided which in interaction with another squeezing plate (5') or the like of the sledge (2'), respectively the support of a second synthetic profile bar, results on connecting in the region of the welding in a gap (9) the width of which can be adjusted by activating the stoppers (3).

6. Device according to one or more of the preceding claims, **characterised in that** the squeezing plate (5) is designed on the side facing for example the gap (9) like a cutter or sharp-cornered (7) so that a welding bead caused by welding can be sheared off, if possible, or be removed easily.

7. Device according to one or more of the preceding claims, **characterised in that** a stop switch is provided in the stop rail/stop edge (4) or in the stopper (3).

8. Device according to one or more of the preceding claims, **characterised in that** the stopper (3) is arranged in the region of the squeezing plate (5).

9. Device according to one or more of the preceding claims, **characterised in that** the two profile bars which have to be welded are each supported movably and can be moved towards each other, and that for limiting each movement one or more stoppers (3, 3') are provided.

10. Device according to one or more of the preceding claims, **characterised in that** the stop position of the stopper (3) and/or the stop rail/edge (4), which restricts the movement of the profile when the stopper (3) is activated, can be adjusted.

11. Device according to one or more of the preceding claims, **characterised in that** a stop position control and a stop position adjustment is provided for adjusting the stop position.

12. Device according to one or more of the preceding claims, **characterised in that** for each profile type which has to be welded a stop set is provided which comprises at least two stoppers, the first stopper defining the final position of the adapting path and the second stopper defining the final position of the connecting path on the path of motion.

13. Device according to one or more of the preceding claims, **characterised in that** a machine control is provided which monitors the welding process and depending on the welding process at first the first stopper and then the second stopper is activated.

14. Device according to one or more of the preceding claims, **characterised in that** the profile type can be entered into the machine control and/or the machine control recognises the profile type and selects a stop set depending on the profile type.

15. Device according to one or more of the preceding claims, **characterised in that** the profile bars are supported movably rectangular to their longitudinal extension and/or mitre surface, respectively welding surface, and thus define the path of motion (10, 10').

16. Device according to one or more of the preceding claims, **characterised in that** the stop rails/stop edges (4) interacting with the stopper (3) are located on the sledge (2') of the second profile which has to be welded.

17. Device according to one or more of the preceding claims, **characterised in that** the stopper has a stop surface interacting with the stop rail/stop edge and the stopper can be activated in two or more positions using other stop surfaces on the same stopper.

## Revendications

1. Dispositif de soudage d'au moins deux profilés en matière plastique destiné à former un élément d'un cadre ou un cadre complet, par exemple une fenêtre, une porte ou une structure similaire, dont au moins un profilé est fixé sur un coulisseau mobile placé sur un rail de guidage de façon à pouvoir approcher les surfaces à souder des deux profilés, **caractérisé en ce qu'**il existe une ou plusieurs butées (3) pouvant limiter le rail de guidage (10) et ainsi le mouvement des coulisseaux (2, 2').

2. Dispositif selon la revendication 1, **caractérisé en ce que** la ou les butée(s) (3) peuvent se mouvoir avec le coulisseau (2) et **en ce qu'**une butée en forme de languette (4) ou de rebord est immobilisée sur le dispositif, par exemple, sur l'élément de guidage (1) et interagit avec la ou les butée(s) (3) lors de sa ou de leur activation.

3. Dispositif selon une ou deux des revendications précédentes, **caractérisé en ce que** la ou les butées (3) sont fixées immobiles au dispositif et **en ce qu'**une butée en forme de languette (4) ou de rebord est fixée au coulisseau (2) mobile par rapport au dispositif, et interagit avec la ou les butée(s) (3) lors de sa ou de leur activation.

4. Dispositif selon un ou plusieurs des revendications précédentes, **caractérisé en ce que** les différentes butées (3) permettent de limiter le mouvement du coulisseau dans des positions différentes sur le rail de guidage (10).

5. Dispositif selon une ou plusieurs des revendications précédentes, **caractérisé en ce qu'**un plateau de compression (5) est situé sur le coulisseau (2) faisant partie de ce même coulisseau (2) qui, en étant rapproché d'un deuxième plateau de compression (5'), d'un élément semblable au deuxième coulisseau (2') ou d'une structure de support du deuxième profilé en plastique, forme une fente (9) avec ce dernier dans la zone de soudage, dont la largeur est ajustable par l'activation des butées (3).

6. Dispositif selon une ou plusieurs des revendications précédentes, **caractérisé en ce que** le plateau de compression (5) possède, par exemple, à son extrémité formant la fente (9) une forme aiguisée comme un couteau ou une forme pointue (7) permettant de couper un renflement créé par le soudage ou au moins de le rendre facilement détachable.

7. Dispositif selon une ou plusieurs des revendications précédentes, **caractérisé en ce qu'**il existe un commutateur soit au niveau de la butée en forme de languette ou de rebord (4) soit au niveau de la butée (3).

8. Dispositif selon une ou plusieurs des revendications précédentes, **caractérisé en ce que** la butée (3) est située au niveau du plateau de compression (5).

9. Dispositif selon une ou plusieurs des revendications précédentes, **caractérisé en ce que** chacun des deux profilés en matière plastique peut être déplacé individuellement et l'un vers l'autre et **en ce que** chacun de leurs mouvements peut être limité et ajusté par une ou plusieurs butées (3).

10. Dispositif selon une ou plusieurs des revendications précédentes, **caractérisé en ce qu'**il existe une possibilité de réglage de la position de la butée (3) et/ou de celle de la butée en forme de languette ou de rebord (4) limitant, lors de l'activation de la butée (3), le mouvement du profilé.

11. Dispositif selon une ou plusieurs des revendications précédentes, **caractérisé en ce que** le positionnement de la butée utilise un système de commande et un système de réglage.

12. Dispositif selon une ou plusieurs des revendications précédentes, **caractérisé en ce qu'**un ensemble de butées, comportant au moins deux butées, est prévu pour chaque type de profilé à souder, dont la première butée limite le mouvement de la mise à la longueur et la deuxième butée limite le mouvement de soudage sur le rail de guidage.

13. Dispositif selon une ou plusieurs des revendications précédentes, **caractérisé en ce qu'**un système de contrôle pour la machine de soudage est prévu, surveillant le procédé de soudage et activant, en fonction de l'évolution de ce procédé, d'abord la première butée puis la deuxième.

14. Dispositif selon une ou plusieurs des revendications précédentes, **caractérisé en ce que** le type de profilé peut être saisi sur le système de contrôle et/ou par le système de contrôle qui reconnaît le type de profilé à souder et qui, dans tous les cas, choisit un ensemble de butées.

15. Dispositif selon une ou plusieurs des revendications précédentes, **caractérisé en ce que** les profilés sont fixés de manière mobile perpendiculairement à leur axe longitudinal et/ou perpendiculairement aux surfaces de leurs onglets ou de soudure, définissant ainsi les rails de guidage (10, 10').

16. Dispositif selon une ou plusieurs des revendications précédentes, **caractérisé en ce que** les butées en forme de languette ou de rebord (4), agissant sur la butée (3), sont situées au niveau du coulisseau (2') du deuxième profilé à souder.

17. Dispositif selon une ou plusieurs des revendications précédentes, **caractérisé en ce que** la butée possède une surface de contact agissant avec la butée en forme de languette ou de rebord et **en ce que** la butée peut être activée en deux ou plusieurs positions, permettant d'utiliser différentes surfaces de contact sur la même butée.
